(19) Europäisches Patentamt
European Patent Office
Office européen des brevets

(11) **EP 4 333 421 A1**

(12) **EUROPEAN PATENT APPLICATION**
published in accordance with Art. 153(4) EPC

(43) Date of publication:
**06.03.2024 Bulletin 2024/10**

(21) Application number: **21939395.6**

(22) Date of filing: **28.12.2021**

(51) International Patent Classification (IPC):
***H04N 5/235*** (2006.01)  ***B25J 13/08*** (2006.01)
***G03B 7/093*** (2021.01)

(52) Cooperative Patent Classification (CPC):
**B25J 13/08; G03B 7/093; H04N 23/70**

(86) International application number:
**PCT/JP2021/048789**

(87) International publication number:
**WO 2022/230241 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021 JP 2021078073**

(71) Applicant: **Sony Group Corporation
Tokyo 108-0075 (JP)**

(72) Inventor: **HORIE, Ryuta
Tokyo 108-0075 (JP)**

(74) Representative: **D Young & Co LLP
120 Holborn
London EC1N 2DY (GB)**

(54) **CONTROL SYSTEM, CONTROL METHOD, AND CAMERA CONTROL DEVICE**

(57)     Provided is a control system that controls an imaging condition of a camera equipped on a robot to capture an image in which a blur is suppressed.

The control system includes a robot control unit that controls a motion of the robot equipped with the camera, and a camera control unit that controls an imaging operation of the camera. The camera control unit determines an exposure time for suppressing a blur that occurs in a captured image of the camera within an allowable pixel number for the moving speed of the camera, and in a case where the camera control unit cannot set the exposure time, the camera control unit instructs the robot control unit to update a speed limit value of the robot.

*FIG. 1*

EP 4 333 421 A1

**Description**

TECHNICAL FIELD

The technology disclosed herein (hereinafter, "the present disclosure") relates to a control system and a control method that include a camera and a robot equipped with the camera and control an operation of the robot on the basis of a captured image of the camera, and a camera control device that controls an imaging operation of the camera equipped on the robot.

BACKGROUND ART

In the field of surgery, surgical robots have been developed for the purpose of suppressing vibration of hands of operators, absorbing differences in skills between the operators by operation support, and the like, and are becoming widespread in medical practice. A surgical robot is generally equipped with one or a plurality of robot arms, and each of the robot arms is equipped with a medical instrument such as, for example, forceps, tweezers, or a treatment tool at its distal end. Furthermore, the robot arm is equipped with a camera for imaging a target subject such as a surgical site or a surgical tool in some cases. The camera equipped on the robot arm may be referred to as hand eye camera. The hand eye camera, which has a view point that can be freely moved through an operation of the robot arm, makes it possible to recognize the position and orientation of the subject located at a position that is difficult to recognize from a fixed camera. From a captured image of the hand eye camera, for example, a target position and orientation of a surgical tool equipped on another robot arm can be calculated. For example, there has been proposed a master slave system of a bilateral control system equipped with a camera on a distal end of a slave robot (see Patent Document 1).

CITATION LIST

PATENT DOCUMENT

Patent Document 1: Japanese Patent Application Laid-Open No. 2020-162916

SUMMARY OF THE INVENTION

PROBLEMS TO BE SOLVED BY THE INVENTION

An object of the present disclosure is to provide a control system and a control method that include a camera and a robot equipped with the camera and control an operation of the robot on the basis of a captured image of the camera, and a camera control device that controls an imaging operation of the camera equipped on the robot.

SOLUTIONS TO PROBLEMS

The present disclosure has been made in view of the above problems, and a first aspect of the present disclosure is a control system including

  a robot control unit that controls a motion of a robot equipped with a camera, and
  a camera control unit that controls an imaging operation of the camera, in which
  the camera control unit sets an imaging condition of the camera on the basis of a moving speed of the camera by the motion of the robot.

However, the term, "system", as used herein refers to a logical assembly of multiple devices (or functional modules that implement specific functions), and each of the devices or functional modules may be or may not be in a single housing.
The camera control unit determines an exposure time for suppressing a blur that occurs in a captured image of the camera within an allowable pixel number for the moving speed of the camera.
In addition, the camera control unit instructs the robot control unit to update a speed limit value of the robot in a case where the camera control unit cannot set the exposure time for suppressing the blur within the allowable pixel number for the moving speed of the camera.
Furthermore, the control system according to the first aspect further includes a position estimation unit that performs position estimation on the basis of the captured image of the camera. Then, the camera control unit changes the allowable pixel number on the basis of a deviation between a target position input to the robot control unit and an estimated position estimated by the position estimation unit.

In addition, a second aspect of the present disclosure is a control method for controlling a robot and a camera equipped on the robot, the control method including steps of

acquiring a moving speed of the camera by a motion of the robot,
setting an imaging condition of the camera on the basis of the moving speed of the camera, and
controlling the imaging operation of the camera on the basis of the imaging condition having been set.

Furthermore, a third aspect of the present disclosure is a camera control device including

an acquirer that acquires a moving speed of a camera by a motion of a robot equipped with the camera,
a setting unit that sets an imaging condition of the camera on the basis of the moving speed of the camera, and
an execution unit that executes an imaging operation of the camera on the basis of the imaging condition having been set.

EFFECTS OF THE INVENTION

The present disclosure can provide a control system, a control method, and a camera control device that control an imaging condition of a camera equipped on a robot to capture an image in which a blur is suppressed.

Note that the effects described herein are merely examples, and the effects exerted by the present disclosure are not limited thereto. Furthermore, the present disclosure may further provide additional effects in addition to the effects described above in some cases.

Still other objects, features, and advantages of the present disclosure will become apparent from a more detailed description based on embodiment as described later and the accompanying drawings.

BRIEF DESCRIPTION OF DRAWINGS

Fig. 1 is a diagram illustrating a functional configuration of a control system 100.
Fig. 2 is a flowchart illustrating an operation procedure in the control system 100.
Fig. 3 is a diagram illustrating a use example of a robot 101 and a camera 102.
Fig. 4 is a diagram exemplifying a relationship between pixels of an image sensor of the camera 102 and a field of view (FOV).
Fig. 5 is a diagram illustrating a functional configuration of a control system 500 having a function of updating a speed limit value.
Fig. 6 is a flowchart illustrating a processing procedure for optimizing an exposure time of the camera 102 while updating the speed limit value in the control system 500.
Fig. 7 is a diagram illustrating a functional configuration of a control system 700 having a function of updating an allowable pixel number N of blur.
Fig. 8 is a flowchart illustrating a processing procedure for optimizing the exposure time of the camera 102 while updating the allowable pixel number N in accordance with a deviation $\Delta x$ in the control system 500.
Fig. 9 is a diagram illustrating an example of a functional configuration of an image stabilization function incorporated in a camera control unit 120.

MODE FOR CARRYING OUT THE INVENTION

Hereinafter, the present disclosure will be described in the following order with reference to the drawings.

A. Overview
B. System configuration
C. Calculation of exposure condition
D. Update of speed limit value
E. Update of allowable pixel number based on deviation
F. Image stabilization function
G. Effects

A. Overview

For example, a control method of a look-and-move method using vision will be considered, in which an image of a target subject is captured by a camera, the captured image is converted into a subject position and orientation in a robot coordinate system by a position estimator, and the robot is controlled to be at a target position. In a case where this type of control is performed by using a hand eye camera equipped on a robot arm, when the robot arm moves, there is a possibility that the captured image is blurred depending on an imaging condition of the camera and a moving speed of an end of the arm, which may cause deterioration in accuracy of the position estimator and an error in detection of the subject.

In visual feedback control of the robot arm using the hand eye camera, it is necessary to input an unblurred stable image to the position estimator. For this reason, for example, the following measures are taken.

(1) A shutter speed of the camera is increased (alternatively, an exposure time is reduced).
(2) The end of the robot arm is stopped or slowly moved to such an extent that a blur does not occur.
(3) Image selection and image interpolation are performed.

The shorter the exposure time, the more robust an image blur, but the worse a signal-to-noise ratio (SNR) of the image. That is, the image blur and the SNR are in a trade-off relationship. In addition, additional illumination must be provided to correspond to a short exposure time.

Therefore, in the present disclosure, a motion controller of the robot equipped with the camera and a camera controller that controls an imaging operation of the camera are bidirectionally connected, and the camera controller sequentially sets the exposure time of the camera and other optical conditions to optimum parameter values in accordance with a moving speed of a distal end of the robot arm (in other words, a moving speed of the camera). Therefore, the present disclosure enables input of an unblurred stable image to the position estimator, and thus, can improve the accuracy of the visual feedback control of the robot arm using the hand eye camera.

Furthermore, in the present disclosure, the camera controller updates the speed limit value of the robot arm in the motion controller of the robot in a case where determining that an image in which a blur is suppressed for the moving speed of the robot arm cannot be captured. Therefore, since the moving speed of the robot arm can be suppressed to an upper limit at which the camera can capture an unblurred stable image, an unblurred stable image is always input to the position estimator, and the accuracy of the visual feedback control of the robot arm using the hand eye camera can be maintained.

In the present disclosure, the camera controller controls an exposure condition and the like of the camera so as to be able to capture an image in which a blur is suppressed within an allowable pixel number, the image being required for achieving desired position estimation accuracy. Then, the camera controller sets a relatively large allowable pixel number in coarse adjustment and sets a smaller allowable pixel number in fine adjustment to control the exposure condition by utilizing a difference in allowable pixel number required for the coarse adjustment and the fine adjustment in the position control, and therefore, a settling time until reaching a target value can be reduced. Specifically, the camera controller adaptively controls the exposure condition of the camera by setting the allowable pixel number of blur on the basis of a deviation between a target position of a target object input to the motion controller of the robot and an estimated position of the target object estimated from the captured image of the camera. For example, the camera controller can reduce the settling time until the target object reaches the target position by setting a relatively large allowable pixel number when the deviation is large and gradually updating the allowable pixel number to a smaller allowable pixel number as the deviation decreases.

B. System configuration

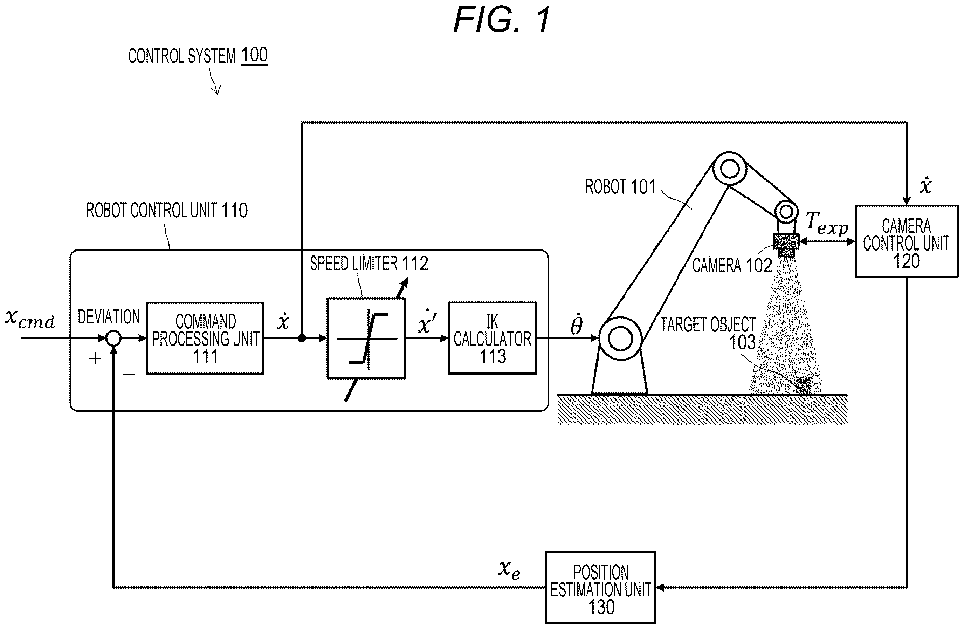

Fig. 1 schematically illustrates a functional configuration of a control system 100 to which the present disclosure is applied. The illustrated control system 100 includes a robot control unit 110 that controls a motion of a robot 101, a camera control unit 120 that controls an imaging condition of a camera 102 equipped on a distal end of the robot 101, and a position estimation unit 130 that estimates a target object 103 that appears in a captured image of the camera 102. The control system 100 is basically a system that controls a position of the robot 101, and is configured such that the robot control unit 110 performs feedback control on the basis of a result of estimating a position of the target object 103 on the basis of the captured image of the camera 102.

Here, the target object may be stationary or moving. In a case where the target object moves (described later), the speed is regarded as a relative speed between (the distal end of) the robot 101 and the target object. In this case, it is assumed that the moving speed of the target object can be detected by using means (not illustrated in Fig. 1) such as a marker attached to the target object. In addition, for simplification of description, it is assumed that the target object moves only in translation with the robot 101 and does not rotate.

Although the robot 101 is illustrated in Fig. 1 as a robot arm having a serial link structure in which a plurality of links is connected in series by joints for simplification, it is sufficient that the camera 102 is equipped on the distal end of the robot 101, and the robot 101 may have another link structure.

The camera 102 includes an image sensor such as a complementary metal oxide semiconductor (CMOS) or a charge coupled device (CCD), and a signal processing unit (correlated double sampling (CDS), automatic gain control (AGC), analog-to-digital conversion (ADC), and the like) that processes an image signal output from the image sensor, and is driven on the basis of a timing signal supplied from the camera control unit 120. The camera 102 is assumed to be a camera for, for example, an RGB image for capturing a natural image, but may be an infrared camera, a depth camera, or another type of camera as long as the camera can capture a target object. In the example illustrated in Fig. 1, the camera 102 is attached to the distal end of the robot 101 in an orientation with a field of view (FOV) facing downward so as to image the target object 103 installed on a floor surface from above.

A command for instructing a desired operation in a work coordinate system of the camera 102 as a target value $x_{cmd}$ is given to the robot control unit 110 from, for example, a host application (an application program for controlling an action of the robot 101, or the like). In the robot control unit 110, a command processing unit 111 converts the input target value $x_{cmd}$ into a speed command value in a coordinate system of the distal end of the robot 101. The speed command value is input to an inverse kinematics (IK) calculator 113 after passing through a speed limiter 112.

The inverse kinematics calculator 113, for example, multiplies a Jacobian matrix $J_{aco}$ by the speed command value to convert the speed command value into an angular speed of each joint of the robot 101. A relationship between the angular speed of each joint of the robot 101 and a translation speed of an arm tip coordinate system of the distal end is represented by the following formula (1) by using the Jacobian matrix $J_{aco}$. Thus, the inverse kinematics calculator 113 can calculate the angular speed of each joint of the robot 101 on the basis of the following formula (2) from the speed command value (the translation speed of the arm tip coordinate system of the distal end) received from the robot control unit 111 via the speed limiter 112.

[Formula 1]

$$^{t}\dot{x} = J_{aco} \cdot \dot{\theta} \qquad \cdots (1)$$

$J_{aco}$ : Jacobian matrix

$\dot{\theta}$ : Angular speed of joint of robot

$\dot{x}$ : Speed of distal end of robot (relative speed)

[Formula 2]

$$\dot{\theta} = J_{aco}^{-1} \cdot {}^{t}\dot{x} \qquad \cdots (2)$$

Therefore, a command value of the angular speed of each joint is given from the inverse kinematics calculator 113, and the robot 101 performs a motion for moving the camera 102 equipped on the distal end. In addition, the speed command value output from the command processing unit 111 is also supplied to the camera control unit 120.

The camera control unit 120 controls the imaging condition of the camera 102 equipped on the distal end of the robot 101. Specifically, the camera control unit 120 includes a timing generator that drives the image sensor of the camera 102, and can control an imaging condition such as an exposure time $T_{exp}$ of the camera 102 by changing a drive timing in accordance with a change of the exposure time $T_{exp}$.

The position estimation unit 130 estimates the position of the target object 103 that appears in the captured image on the basis of the captured image of the camera 102. An estimation accuracy of the position estimation unit 130 depends on a blur amount included in the captured image of the camera 102.

In the present embodiment, the speed command value output from the command processing unit 111 is also supplied to the camera control unit 120 (as described above). Then, the camera control unit 120 sequentially optimizes the imaging condition such as the exposure time $T_{exp}$ of the camera 102 so that the target object 103 can be imaged while suppressing a blur within the allowable pixel number N in accordance with the moving speed of the camera 102. Therefore, the position estimation unit 130 can estimate the position of the target object 103 with desired accuracy on the basis of the image in which a blur is suppressed within the allowable pixel number by the camera 102 capturing the image under the optimized imaging condition.

The moving speed of the camera 102 here is a relative speed of the camera 102 with respect to the target object 103. When the target object 103 is stationary, the moving speed of the camera 102 is equal to the moving speed of the distal end of the robot 101 that moves on the basis of the speed command value $x_{cmd}$.

Furthermore, the allowable pixel number N of blur is a value obtained by expressing the blur amount allowed when the position estimation unit 130 in a subsequent stage estimates the position of the target object 103 on the basis of the captured image of the camera 102 by the pixel number N of the image sensor of the camera 102. It is assumed that the allowable pixel number is different between coarse adjustment and fine adjustment in the position control.

The camera control unit 120 controls the optimum exposure condition of the camera 102 in accordance with the moving speed of the robot 101, and thus, the camera 102 can always capture a stable image in which a blur is within the allowable pixel number and supply a stable image to the position estimation unit 130. As a result, even if the moving speed of the robot 101 changes, the position estimation unit 130 can estimate a position $x_e$ of the target object 103 with desired accuracy from the captured image of the camera 102 on the basis of the captured image in which a blur is suppressed within the allowable pixel number.

Thereafter, a deviation $\Delta x$ (= $x_{cmd}$ - $x_e$) between the target value and the position estimated by the position estimation unit 130 is given to the robot control unit 110 as an instruction of the next time. Then, the robot control unit 110 generates a control command that minimizes the deviation, and feedback control of the robot 101, imaging control of the camera 102 according to the moving speed by the camera control unit 120, and position estimation processing from the captured image by the position estimation unit 130 are repeatedly executed.

Note that both the robot control unit 110 and the camera control unit 120 may be incorporated in one device, or may be physically independent devices. In this case, a communication interface (physical layer, physical medium dependent) between the robot control unit 110 and the camera control unit 120 may be configured on the basis of a high-speed differential transmission standard such as low voltage differential signalling (LVDS), current mode logic (CML), or small form-factor pluggagle (SFP), and a protocol of an upper layer may be configured by a field programmable gate array (FPGA) or a processor, or a combination thereof.

Furthermore, the position estimation unit 130 may estimate the position of the target object 103 in the captured image by using a method of calculating a position representing a barycentric position of an image region of the target object 103 by learning with use of a convolutional neural network (CNN), which is one of machine learning methods, or a method of estimating an orientation by using an augmented reality (AR) marker (the AR marker may be a two-dimensional code such as a QR code (registered trademark)). The position estimation unit 130 includes, for example, a processor such as a central processing unit (CPU), a graphics processing unit (GPU), or a general purpose graphics processing unit (General-purpose computing on graphics processing units (GPGPU)), an FPGA, or a combination of two or more thereof.

Furthermore, in a configuration example of the control system 100 illustrated in Fig. 1, the speed command value is supplied from the command processing unit 111 to the camera control unit 120. However, a position command value or an acceleration command value may be supplied from the command processing unit 111. In this case, the camera control unit 120 can have a configuration similar to the configuration in Fig. 1 by being equipped with a differentiator or an integrator.

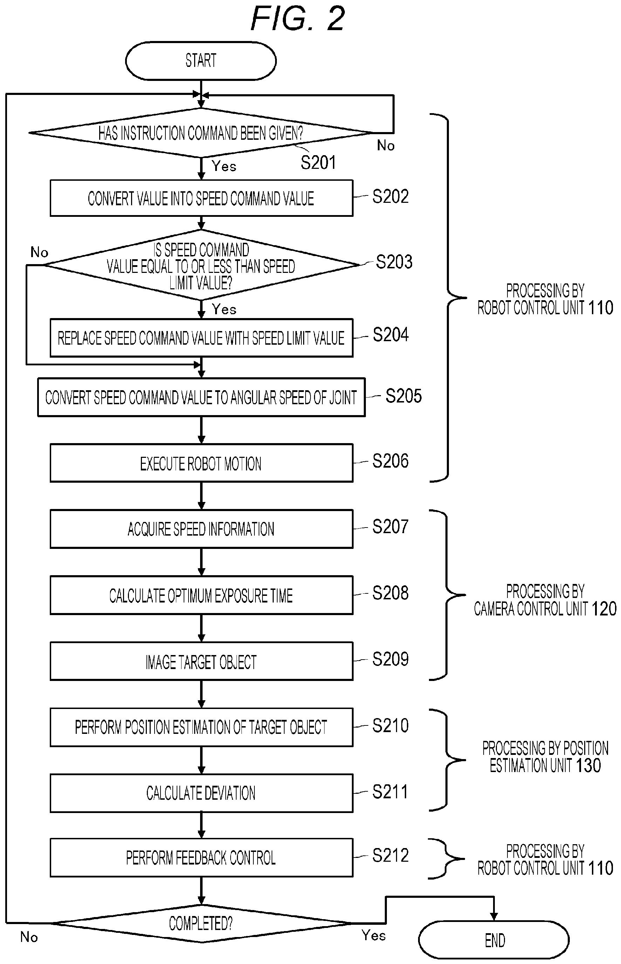

Fig. 2 illustrates an operation procedure in the control system 100 in the form of a flowchart.

When a command for instructing the desired operation in the work coordinate system of the camera 102 as the target value $x_{cmd}$ is given to the control system 100 (Yes in step S201), the command processing unit 111 converts the input target value $x_{cmd}$ into a speed command value in the coordinate system of the distal end of the robot 101 in the robot control unit 110 (step S202).

The speed limiter 112 compares the speed command value calculated in step S202 with the speed limit value set in the speed limiter 112 (step S203). If the speed command value is equal to or less than the speed limit value (Yes in step S203), the speed limiter 112 passes the speed command value as it is. In addition, in a case where the speed command value exceeds the speed limit value (No in step S203), the speed limiter 112 replaces the speed command value with the speed limit value (step S204).

Next, the inverse kinematics calculator 113 multiplies the speed command value having passed through the speed limiter 112 by the Jacobian matrix $J_{aco}$ to convert the speed command value into the angular speed of each joint of the robot 101 (step S205).

Then, each joint is driven in accordance with an angular speed command value, and the motion of the robot 101 is achieved (step S206).

On the other hand, when acquiring the speed command value generated in step S202 (step S207), the camera control unit 120 calculates an optimum exposure time of the camera 102 that can suppress a blur within the allowable pixel number with respect to the speed command value (step S208). Then, the timing generator in the camera control unit 120 generates and outputs a timing signal for driving the image sensor of the camera 102 on the basis of the exposure time calculated in step S208. As a result, the camera 102 equipped on the distal end of the robot 101 captures an image of the target object 103 below (step S209).

The position estimation unit 130 estimates the position of the target object 103 with desired accuracy on the basis of the image captured by the camera 102 under the optimized imaging condition and suppressing a blur within the allowable pixel number (step S210) .

Thereafter, the deviation $\Delta x$ (= $x_{cmd}$ - $x_e$) between the target value and the position estimated by the position estimation unit 130 is given to the robot control unit 110 as an instruction of the next time (step S211). Then, the robot control unit 110 generates a control command that minimizes the deviation, and performs the feedback control of the robot 101 (step S212) .

The processing operation as described above is repeatedly executed while motion control of the robot 101 is performed.

C. Calculation of exposure condition

As described in the above section B, the camera control unit 120 calculates the imaging condition such as the exposure time of the camera 102 on the basis of the moving speed of the camera 102 in order to obtain the captured image capable of position estimation with desired accuracy. In this section C, a method of calculating the exposure condition of the camera 102 will be described.

The moving speed of the camera 102 is strictly a relative speed of the camera 102 with respect to the target object 103. The target object 103 is moving in some cases, but here, for simplification of description, the target object 103 is assumed to be stationary. In addition, not only the position but also the orientation of the camera 102 can be changed by the motion of the robot 101, but only a translational motion of the camera 102 is concerned in this section C for simplification of description.

Furthermore, the accuracy with which the position estimation unit 130 estimates the position of the target object 103 is represented by a value obtained by representing the blur amount allowed in the captured image of the camera 102 by a pixel number of the image sensor. It is assumed that the allowable pixel number is different between coarse adjustment and fine adjustment in the position control, which will be descried later.

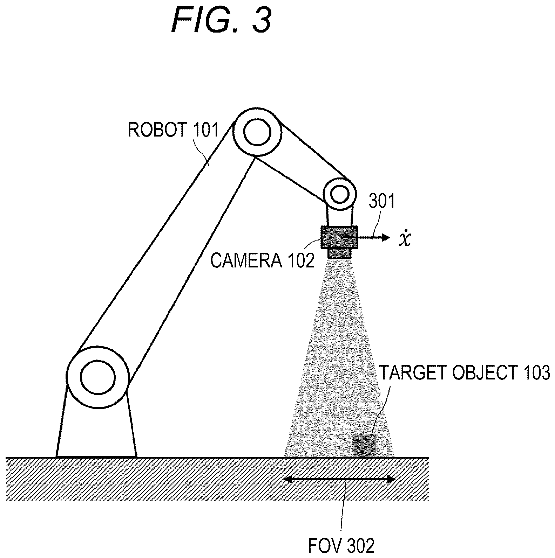

As illustrated in Fig. 3, it is assumed that the camera 102 is equipped on the distal end of the robot 101 in an orientation in which a field of view (FOV) indicated by a reference sign 302 faces downward, and images the target object 103 in the field of view. The motion of the robot 101 causes the camera 102 to move (translate), for example, in a direction of an arrow indicated by a reference sign 301. Furthermore, the field of view (FOV) of the camera 102 is a range including the target object 103 below. In a case where the target object 103 is stationary, when the camera 102 moves in the direction of the arrow 301, the target object 103 relatively moves at the moving speed of the camera 102 in the range of the field of view (FOV) 302 of the camera 102, in other words, in the captured image, in an opposite direction to the direction of the arrow 301.

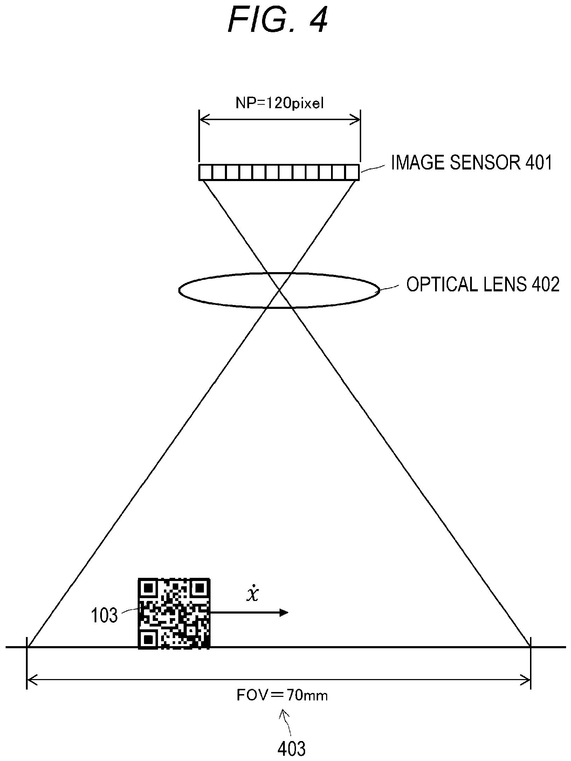

Fig. 4 exemplifies a relationship between pixels of the image sensor of the camera 102 and the field of view (FOV). The allowable pixel number N of blur and the exposure condition will be described with reference to Fig. 4.

In an example illustrated in Fig. 4, an optical lens 402 is disposed in front of an image sensor 401 of the camera 102. The image sensor 401 and the optical lens 402 are separated from each other by a focal length of the optical lens 402. Note that the optical lens 402 may be configured by a combination of a plurality of glass lenses, but is illustrated in a simplified manner in Fig. 4. The optical lens 402 collects reflected light from a field of view (FOV) 403 of the camera 102 and forms an image on an imaging surface of the image sensor 401. The target object 103 is included within the field of view (FOV) 403. In a case where the motion of the robot 101 causes the camera 102 to translate, the target object 103 moves within the field of view (FOV) 403 in an opposite direction to the camera 102 and at the same moving speed.

For simplification, the exposure condition of the camera 102 will be described assuming that the image sensor 401 captures an image of the field of view (FOV) 403. In Fig. 4, it is assumed that a field of view (FOV) 403 having a width of 70 mm is imaged by the image sensor 401 having a number NP of pixels = 12 pixels. Then, in order for the position estimation unit 130 to perform the position estimation of the target object 103 with desired accuracy from the captured image in the field of view (FOV) 403, it is necessary to image the field of view (FOV) 403 while suppressing a blur within the allowable pixel number N according to the position estimation accuracy. Therefore, in order to suppress the blur amount of the captured image within N pixels, the camera control unit 120 needs to determine the exposure time $T_{exp}$ of the camera 102 under the exposure condition satisfying the following formula (3).

[Formula 3]

$$T_{exp} \leq \frac{FOV \cdot N}{\dot{x} \cdot NP} \qquad \cdots (3)$$

$NP$ : number of Pixels

$T_{exp}$ : Exposure time

$\dot{x}$ : Speed of the Motion

*FOV* : Field of View

In the formula (3), the number NP of pixels of the image sensor 401 is a value known from a specification of the camera 102, in other words, is known data for the camera control unit 120. In addition, the moving speed (or the relative speed of the target object 103 with respect to the camera 102) of the camera 102 is also data supplied from the command processing unit 111 to the camera control unit 120. Then, a magnitude of the field of view (FOV) 403 of the camera 102 can be calculated on the basis of an angle of view determined by a size of the image sensor 401 and the focal length from the image sensor 401 to the optical lens 402, and a distance to the subject (target object 103). The angle of view of the camera 102 is data known to the camera control unit 120, and the distance to the subject can be acquired by distance measurement or other means.

Furthermore, the allowable pixel number N of blur is determined by whether the feedback control of the robot 101 in the control system 100 is in a coarse adjustment stage or a fine adjustment stage. In the coarse adjustment, N may be set to a large pixel number, but in the fine adjustment, N needs to be suppressed to a small pixel number. In any case, the allowable pixel number N is also known data to the camera control unit 120.

Therefore, the camera control unit 120 can calculate the optimum exposure time $T_{exp}$ that can suppress the blur amount of the captured image within N pixels on the basis of the formula (3) in accordance with the moving speed of the camera 102 (or the relative speed of the target object 103 with respect to the camera 102).

D. Update of speed limit value

As described above, in the control system 100 illustrated in Fig. 1, the camera control unit 120 sets the optimum exposure time in accordance with the moving speed of the camera 102 so that the camera 102 can image the target object 103 with a blur within the allowable pixel number N. However, if the moving speed of the camera 102 is excessively fast, there is a problem that the blur of the captured image cannot be suppressed within the allowable pixel number N only by reducing the exposure time, or only an image with a deteriorated SNR can be captured because the exposure time is excessively short, and as a result, the position estimation accuracy of the position estimation unit 130 is lowered.

Therefore, in this section D, as an application example of the control system 100 illustrated in Fig. 1, a control system is proposed in which the speed limit value of the robot 101 is updated in a case where the camera control unit 120 determines that an image in which a blur is suppressed for the moving speed of the camera 102 cannot be captured.

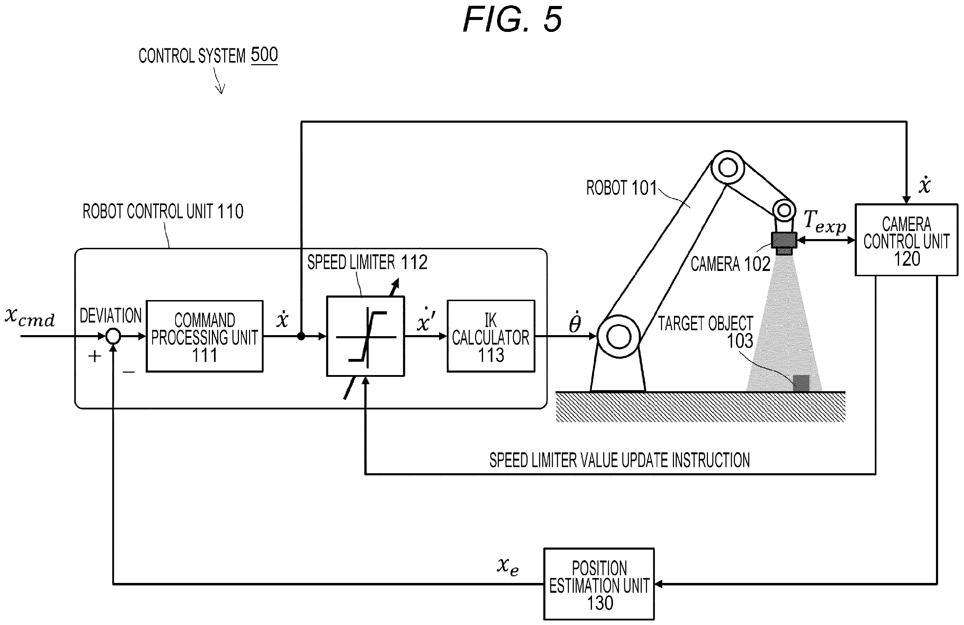

Fig. 5 illustrates a functional configuration of a control system 500 having a function of updating the speed limit value. However, functional blocks common to the control system 100 illustrated in Fig. 1 will be denoted by the same reference signs, and redundant description will be appropriately omitted here.

A main difference between the control system 500 and the control system 100 is that the camera control unit 120 has a function of instructing the speed limiter 112 to update the speed limit value, and outputs an instruction signal for updating the speed limit value to the speed limiter 112.

The speed command value output from the command processing unit 111 is also supplied to the camera control unit 120 (as described above). Then, the camera control unit 120 sequentially optimizes the imaging condition such as the exposure time of the camera 102 so that the target object 103 can be imaged while suppressing a blur within the allowable pixel number in accordance with the moving speed of the camera 102.

Furthermore, in a case where the camera control unit 120 determines that the image in which the blur is suppressed cannot be stably captured only by the adjustment of the exposure time for the moving speed of the camera 120, the camera control unit outputs an instruction to update the speed limit value to a lower speed limit value to the speed limiter 112 in the robot control unit 110.

Then, the speed limiter 112 compares the speed command value with the updated speed limit value. In a case where the speed command value exceeds the speed limit value, the speed limiter 112 replaces the speed command value with the speed limit value. Therefore, it is possible to prevent the camera 102 from moving at such a speed that a blur of the captured image cannot be suppressed within the allowable pixel number N. As a result, the camera 102 always captures an image of the target object 103 under an optimized imaging condition, and the position estimation unit 130 can estimate the position of the target object 103 with desired accuracy from a stable captured image in which a blur is suppressed within the allowable pixel number N.

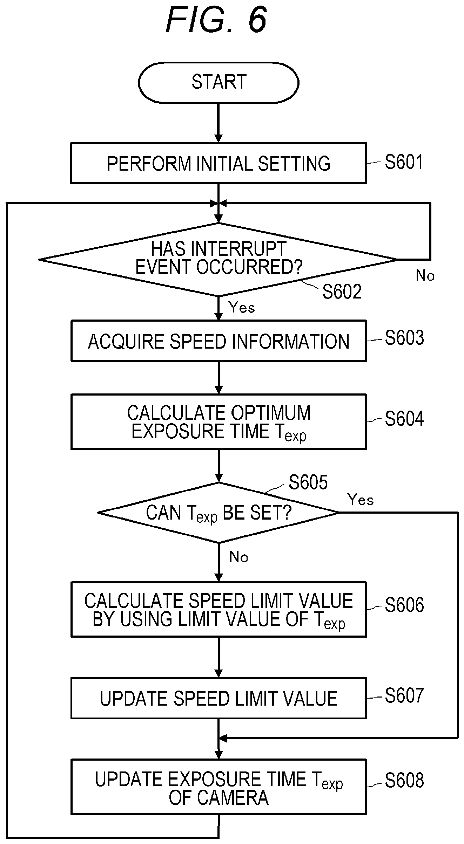

Fig. 6 illustrates, in the form of a flowchart, a processing procedure for optimizing the exposure time of the camera 102 while updating the speed limit value in the control system 500 illustrated in Fig. 5.

First, initial setting of each unit in the control system 500 is performed (step S601). In this processing step, for example, each variable used in the formulas (1) and (2) is set in each unit in the control system 500, and the camera control unit 120 initializes a set value as necessary.

Then, when a predetermined interrupt event occurs (Yes in step S602), the camera control unit 120 acquires speed information output from the command processing unit 111 (step S603). The predetermined interrupt event is not limited. For example, an interrupt event may occur periodically, or an interrupt event may occur when the speed information output from the command processing unit 111 changes. Furthermore, since the angle of view (or the field of view (FOV)) changes by a zoom operation of the lens of the camera 102, an interrupt event may occur every time the zoom operation is performed.

Next, the camera control unit 120 calculates the optimum exposure time $T_{exp}$ of the camera 102 on the basis of the formula (3) from the speed information acquired in step S603 (step S604). Then, the camera control unit 120 checks whether or not the exposure time $T_{exp}$ calculated in step S604 can be set in the timing generator for the camera 102 and whether or not a captured image having an SNR sufficient for performing the position estimation with the exposure time $T_{exp}$ can be obtained (step S605).

Here, in a case where the exposure time $T_{exp}$ cannot be set in the camera 102 by the timing generator, or a captured image having an SNR sufficient for performing position the estimation cannot be obtained with the exposure time $T_{exp}$ (No in step S605), the camera control unit 120 calculates the speed limit value of the camera 102 by using a limit value of the exposure time $T_{exp}$ (step S606). The limit value of the exposure time $T_{exp}$ is, for example, a limit value of the exposure time $T_{exp}$ that can be set in the camera 102 by the timing generator, or a limit value of the exposure time $T_{exp}$ for capturing an image of an SNR sufficient for the performing position estimation.

Next, the camera control unit 120 outputs the speed limit value calculated in step S606 to the speed limiter 112 to update the speed limit value (step S607).

Subsequently, the camera control unit 120 updates the exposure time $T_{exp}$ of the timing generator for the camera 102 (step S608). In addition, in a case where the exposure time $T_{exp}$ calculated in step S604 can be set in the timing generator for the camera 102 (Yes in step S605), the camera control unit 120 sets the exposure time $T_{exp}$ in the timing generator for the camera 102. Furthermore, in a case where the exposure time $T_{exp}$ calculated in step S604 cannot be set in the timing generator for the camera 102 (No in step S605), the camera control unit 120 sets the limit value of the exposure time $T_{exp}$ in the timing generator for the camera 102.

Thereafter, the processing returns to step S602 and stands by until the next interrupt event occurs.

E. Update of allowable pixel number based on deviation

The control system 100 illustrated in Fig. 1 can stably capture an image in which a blur is suppressed within the allowable pixel number by optimizing the exposure time of the camera 102, the image being required for achieving desired position estimation accuracy. In addition, by updating the speed limit value that regulates the moving speed of the camera 102, the control system 500 illustrated in Fig. 5 can capture a stable image by optimizing the exposure time within the limit value.

Furthermore, in this section E, as an application example of each of the control systems 100 and 500 illustrated in Figs. 1 and 5, there is proposed a control system configured to update the allowable pixel number N of blur on the basis of a deviation between the input target position $x_{cmd}$ and the estimated position $x_e$ estimated from a captured image.

The control system proposed in this section E focuses on the fact that the allowable pixel number obtained in differs between the coarse adjustment and the fine adjustment in the position control, the camera control unit 120 sets a relatively large allowable pixel number N in the coarse adjustment, and sets a smaller allowable pixel number N in the fine adjustment to control the exposure condition, and the settling time until the target object 103 reaches the target position is reduced.

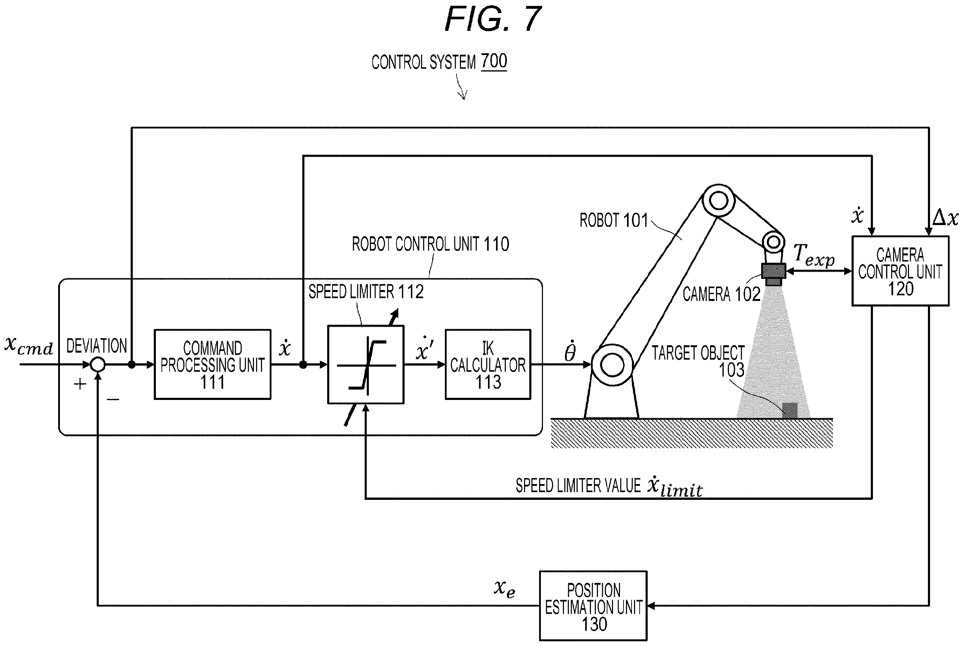

Fig. 7 is a diagram illustrating a functional configuration of a control system 700 having a function of updating the allowable pixel number N of blur. However, functional blocks common to the control system 100 illustrated in Fig. 1 will be denoted by the same reference signs, and redundant description will be appropriately omitted here.

A main difference between the control systems 100 and 500 in the control system 700 is that the camera control unit 120 sequentially updates the allowable pixel number N of blur on the basis of the deviation $\Delta x$ between the target position $x_{cmd}$ of the target object 103 input to the robot control unit 110 and the estimated position $x_e$ of the target object estimated from the captured image of the camera 102 by the position estimation unit 130, and adaptively controls the exposure time $T_{exp}$ of the camera 102 on the basis of the formula (3) by using an updated value of N.

Specifically, the camera control unit 120 can reduce the settling time until the target object 103 reaches the target position by setting a relatively large allowable pixel number N when the deviation $\Delta x$ is large and gradually updating the allowable pixel number to a smaller allowable pixel number N as the deviation $\Delta x$ decreases. The camera control unit 120 may linearly update the allowable pixel number N in proportion to the deviation $\Delta x$. Alternatively, the camera control unit 120 may include a conversion table (LUT) for converting the deviation $\Delta x$ into the allowable pixel number N so as to nonlinearly change the allowable pixel number N with respect to the change in the deviation $\Delta x$.

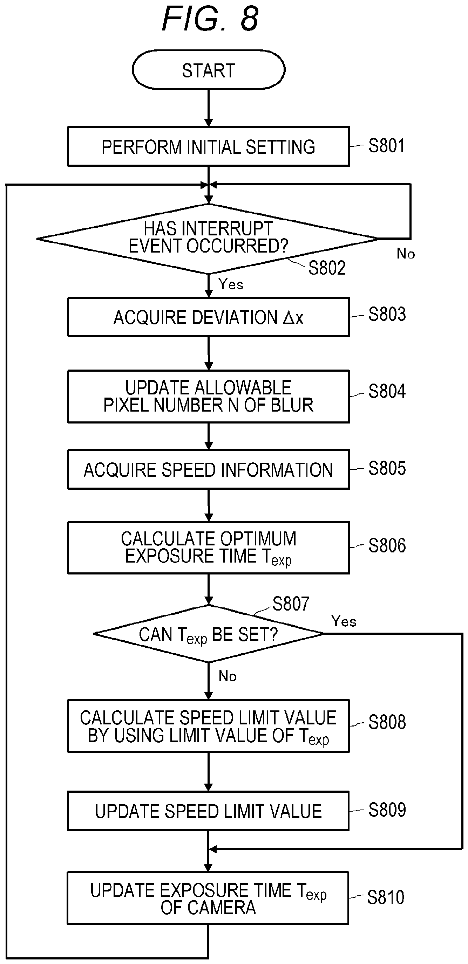

Fig. 8 illustrates, in the form of a flowchart, a processing procedure for optimizing the exposure time of the camera 102 while updating the allowable pixel number N in accordance with the deviation $\Delta x$ in the control system 500.

First, initial setting of each unit in the control system 500 is performed (step S801). In this processing step, for example, each variable used in the formulas (1) and (2) is set in each unit in the control system 500, and the camera control unit 120 initializes a set value as necessary.

Then, when a predetermined interrupt event occurs (Yes in step S802), the camera control unit 120 acquires the deviation $\Delta x$ between the target position $x_{cmd}$ of the target object input to the robot control unit 110 and the estimated position $x_e$ of the target object estimated by the position estimation unit 130 from the captured image of the camera 102 (step S803), and updates the deviation $\Delta x$ to the allowable pixel number N of blur (step S804). The predetermined interrupt event is not limited. For example, an interrupt event may occur periodically, or an interrupt event may occur when the speed information output from the command processing unit 111 changes. In addition, an interrupt event may occur every time the zoom operation of the lens of the camera 102 is performed.

Next, the camera control unit 120 acquires the speed information output from the command processing unit 111 (step S805). Then, the camera control unit 120 calculates the exposure time $T_{exp}$ of the camera 102 on the basis of the formula (3) by using the updated value of N (step S806).

Next, the camera control unit 120 checks whether or not the exposure time $T_{exp}$ calculated in step S806 can be set in the timing generator for the camera 102 and whether or not a captured image having an SNR sufficient for performing the position estimation with the exposure time $T_{exp}$ can be obtained (step S807).

Here, in a case where the exposure time $T_{exp}$ cannot be set in the camera 102 by the timing generator, or a captured image having an SNR sufficient for performing position the estimation cannot be obtained with the exposure time $T_{exp}$ (No in step S807), the camera control unit 120 calculates the speed limit value of the camera 102 by using a limit value of the exposure time $T_{exp}$ (step S808). The limit value of the exposure time $T_{exp}$ is, for example, a limit value of the exposure time $T_{exp}$ that can be set in the camera 102 by the timing generator, or a limit value of the exposure time $T_{exp}$ for capturing an image of an SNR sufficient for the performing position estimation.

Next, the camera control unit 120 outputs the speed limit value calculated in step S808 to the speed limiter 112 in the robot control unit 110 to update the speed limit value (step S809).

Subsequently, the camera control unit 120 updates the exposure time $T_{exp}$ of the timing generator for the camera 102 (step S810). In addition, in a case where the exposure time $T_{exp}$ calculated in step S806 can be set in the timing generator for the camera 102 (Yes in step S807), the camera control unit 120 sets the exposure time $T_{exp}$ in the timing generator for the camera 102. Furthermore, in a case where the exposure time $T_{exp}$ calculated in step S806 cannot be set in the timing generator for the camera 102 (No in step S807), the camera control unit 120 sets the limit value of the exposure time $T_{exp}$ in the timing generator for the camera 102.

Thereafter, the processing returns to step S802 and stands by until the next interrupt event occurs.

Note that, in step S806, the camera control unit 120 may also determine a frame rate of the camera 102 on the basis of the deviation $\Delta x$ acquired in step S803 and the speed information acquired in step S805, and set the frame rate in the camera 102 in step S810. Specifically, in a case where the positional control of the robot 101 on the target object 103 converges and the deviation $\Delta x$ is small, or in a case where the relative speed between the camera 102 and the target object 103 is not fast or is stationary, the frame rate of the camera 102 can be adaptively set to be a small value. As a result, a frequency of image data input to the position estimation unit 130 can be reduced, and power of the control system 700 can be saved.

F. Image stabilization function

In the above description, a case where the camera 102 translates, in other words, a case where the relative speed between the camera 102 and the target object 103 has only a translation speed as a component has been described. Furthermore, a zoom function of the lens of the camera 102 has not been mentioned, and changing of the angle of view or the field of view (FOV) of the camera 102 due to a zoom of the lens has not been mentioned.

In practice, the camera control unit 120 has an image stabilization function of generally suppressing a blur of a captured image of the camera 102 in consideration of the relative speed that targets the rotation speed in addition to the translation speed between the camera 102 and the target object 103, and also in response to a change in the field of view (FOV) of the camera 102 due to the zoom operation of the lens.

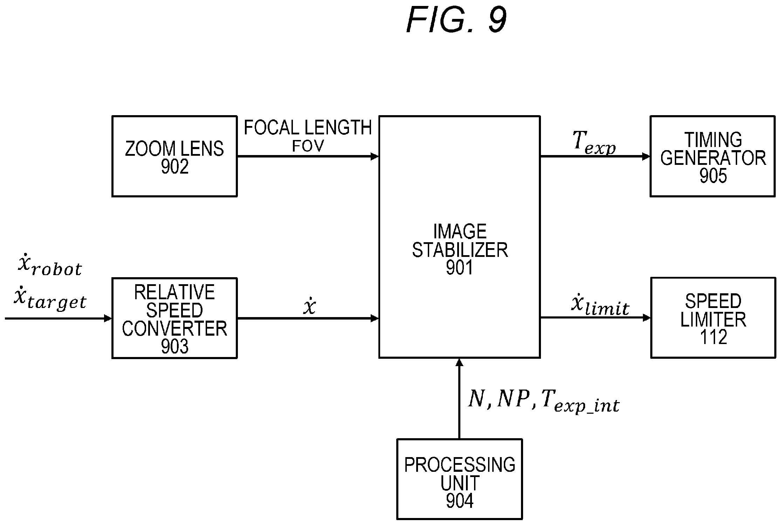

Fig. 9 illustrates an example of a functional configuration of the image stabilization function incorporated in the camera control unit 120.

An image stabilizer 901 acquires information regarding the focal length and the field of view (FOV) from a zoom lens 902 of the camera 102.

A relative speed converter 903 acquires speed information of the robot 101 from the command processing unit 111. Furthermore, the relative speed converter 903 acquires speed information of the target object 103 imaged by the camera 102 on the basis of a marker or the like attached to the target object 103. Then, the relative speed converter 903 converts the speed information of the robot 101 and the speed information of the target object 103 into a relative speed between the robot 101 (or the camera 102) and the target object 103, and supplies the relative speed to the image stabilizer 901.

A processing unit 904 manages a pixel number NP of the image sensor of the camera 102 and an initial value $T_{exp\_int}$ of the exposure time of the camera 102, and supplies these static data to the image stabilizer 901. Furthermore, the processing unit 904 manages the allowable pixel number N of blur that occurs in the captured image of the camera 102, and also supplies the allowable pixel number N to the image stabilizer 901. Although the allowable pixel number N may be a fixed value, the allowable pixel number N of blur may be sequentially updated on the basis of the deviation $\Delta x$ between the target position $x_{cmd}$ and the estimated position $x_e$ as described in the above section E.

Then, the image stabilizer 901 calculates the optimum exposure time $T_{exp}$ according to the relative speed on the basis of the formula (3) by using the information of the field of view (FOV) supplied from the zoom lens 902, the relative speed supplied from the relative speed converter 903, the allowable pixel number N, the pixel number NP of the image sensor, and the initial value $T_{exp\_int}$ of the exposure time supplied from the processing unit 904, and outputs the calculated optimum exposure time $T_{exp}$ to a timing generator (TG) 905 for the camera 102.

Furthermore, in a case where the optimum exposure time $T_{exp}$ according to the relative speed cannot be set in the timing generator 905 on the basis of the formula (3), or in a case where a captured image with an SNR sufficient for performing the position estimation cannot be obtained with the exposure time $T_{exp}$, the image stabilizer 901 calculates the speed limit value of the camera 102 by using the limit value of the exposure time $T_{exp}$ and sets the speed limit value in the speed limiter 112.

Since the camera control unit 120 is equipped with the image stabilization function as illustrated in Fig. 9, by controlling the exposure time of the camera 101 and the speed limit value of the robot 101 in accordance with the relative speed between the robot 101 (or the camera 102) and the target object 103, it is possible to capture an image in which the SNR is maintained while suppressing the image blur within the allowable pixel number and supply the image to the position estimation unit 130. As a result, it is possible to improve the position estimation accuracy and prevent malfunction of the robot.

G. Effects

In this section G, effects exerted by the present disclosure are summarized.

(1) In the present disclosure, the motion controller of the robot equipped with the camera and the camera controller that controls the imaging operation of the camera are bidirectionally connected, and imaging parameters such as the exposure time and the optical condition of the camera can be sequentially set to optimum values in accordance with the moving speed of the camera. Therefore, the captured image in which a blur is suppressed within the allowable pixel number can be supplied to the position estimator. As a result, it is possible to improve the position estimation accuracy and prevent malfunction of the robot.

(2) In the present disclosure, in a case where the camera controller cannot set the exposure time for suppressing the blur within the allowable pixel number for the moving speed of the camera, the camera controller can instruct the motion controller to update the speed limit value. As a result, the motion controller moves the robot so that the moving speed of the camera falls within a range in which a blur of the captured image can be suppressed by adjusting the exposure time. The camera controller controls the update of the speed limit value together with the imaging condition of the camera in accordance with the moving speed of the camera, and thus, the performance of the visual feedback control based on the position estimation using the captured image can be expected to improve. In addition, since the frame rate of the camera can be adaptively optimized, power consumption can be suppressed.

(3) In the present disclosure, the accuracy of the position estimation can be adjusted by updating the allowable pixel number N of blur in the captured image of the camera in accordance with the deviation between the target position input to the motion controller and the estimated position estimated from the captured image of the camera by the position estimator. Specifically, by changing the allowable pixel number N to a large value when the deviation is large, and changing the allowable pixel number N to a small value when the deviation is small, the coarse adjustment and the fine adjustment in the position control can be configured to reduce the settling time to the target value.

(4) The angle of view (or the field of view (FOV)) of the camera changes by the zoom operation of the camera lens. In the present disclosure, since the camera controller recalculates the exposure condition of the camera and updates the speed limit value every time the zoom operation is performed, a blur of the captured image can be suppressed within the allowable pixel number even when the zoom operation of the lens is performed.

(5) In the present disclosure, even in a situation where a high-speed shutter or additional illumination cannot be installed in the camera, by changing the imaging condition or the speed limit value of the camera in accordance with the moving speed of the camera by the motion of the robot, it is possible to capture a stabilized image while suppressing a blur amount required for the position estimation, improve the position estimation accuracy, and prevent malfunction of the robot.

(6) In the present disclosure, in a case where the positional control of the robot on the target object converges and the deviation is small, or in a case where the relative speed between the camera and the target object is not fast or is stationary, the frame rate of the camera can be adaptively set to be a small value. As a result, the frequency of the image data input to the position estimator can be reduced, and the power consumption can be suppressed.

INDUSTRIAL APPLICABILITY

The present disclosure has been described in detail above with reference to the specific embodiment. However, it is obvious that those skilled in the art can make modifications and substitutions of the embodiment without departing from the gist of the present disclosure.

The embodiment in which the present disclosure is applied to a serial link robot and a control system that controls a hand eye camera equipped on the distal end of the robot has been mainly described. However, the gist of the present disclosure is not limited thereto. In addition, the present disclosure can be applied to, for example, a master-slave surgical system used in the medical field, but can also be applied to various types of robots such as an assembly robot used in the manufacturing field and a transfer robot that transfers packages.

In short, the present disclosure has been described in a form of exemplification, and the contents described herein should not be interpreted in a limited manner. In order to determine the gist of the present disclosure, the scope of claims should be taken into consideration.

Note that the present disclosure can also have the following configurations.

(1) A control system includes

a robot control unit that controls a motion of a robot equipped with a camera, and
a camera control unit that controls an imaging operation of the camera, in which
the camera control unit sets an imaging condition of the camera on the basis of a moving speed of the camera by the motion of the robot.

(2) In the control system according to (1) described above, the camera control unit determines an exposure time for suppressing a blur that occurs in a captured image of the camera within an allowable pixel number for the moving speed of the camera.

(3) In the control system according to (2) described above, when the moving speed of the camera increases, the camera control unit reduces the exposure time and controls the blur of the captured image to be within the allowable pixel number.

(4) In the control system according to (2) or (3) described above, the camera control unit instructs the robot control unit to update a speed limit value of the robot in a case where the camera control unit cannot set the exposure time for suppressing the blur within the allowable pixel number for the moving speed of the camera.

(5) In the control system according to (4) described above, the camera control unit instructs the robot control unit to decrease the speed limit value in a case where the moving speed of the camera cannot suppress the blur within the allowable pixel number in the exposure time to be set as a shortest possible exposure time.

(6) The control system according to any of (2) to (5) described above further includes a position estimation unit that performs position estimation on the basis of the captured image of the camera, in which
the camera control unit changes the allowable pixel number on the basis of a deviation between a target position input to the robot control unit and an estimated position estimated by the position estimation unit.

(7) In the control system according to (6) described above, the camera control unit changes the allowable pixel number to a larger value as the deviation increases, and changes the allowable pixel number to a smaller value as the deviation decreases.

(8) In the control system according to (6) or (7) described above, the camera control unit controls a frame rate of the camera on the basis of at least one of the deviation or the moving speed of the camera.

(9) In the control system according to (8) described above, the camera control unit reduces a frame rate of the camera when the deviation is small or the moving speed of the camera is not fast.

(10) In the control system according to any of (1) to (9) described above, the camera control unit determines the imaging condition of the camera every time a zoom operation of the camera is performed.

(11) In the control system according to any of (1) to (10) described above, the moving speed of the camera includes a relative speed between a target object of the robot and the camera.

(12) A control method for controlling a robot and a camera equipped on the robot includes steps of

acquiring a moving speed of the camera by a motion of the robot,
setting an imaging condition of the camera on the basis of the moving speed of the camera, and
controlling the imaging operation of the camera on the basis of the imaging condition having been set.

(13) A camera control device includes

an acquirer that acquires a moving speed of a camera by a motion of a robot equipped with the camera,
a setting unit that sets an imaging condition of the camera on the basis of the moving speed of the camera, and
an execution unit that executes an imaging operation of the camera on the basis of the imaging condition having been set.

REFERENCE SIGNS LIST

| 100 | Control system |
|-----|----------------|
| 101 | Robot |
| 102 | Camera |
| 103 | Target object |
| 110 | Robot control unit |
| 111 | Command processing unit |
| 112 | Speed limiter |
| 113 | Inverse kinematics calculator |
| 120 | Camera control unit |
| 130 | Position estimation unit |
| 901 | Image stabilizer |
| 902 | Zoom lens |
| 903 | Relative speed converter |
| 904 | Processing unit |
| 905 | Timing generator |

**Claims**

1. A control system comprising:

   a robot control unit that controls a motion of a robot equipped with a camera; and
   a camera control unit that controls an imaging operation of the camera, wherein
   the camera control unit sets an imaging condition of the camera on a basis of a moving speed of the camera by the motion of the robot.

2. The control system according to claim 1, wherein the camera control unit determines an exposure time for suppressing a blur that occurs in a captured image of the camera within an allowable pixel number for the moving speed of the camera.

3. The control system according to claim 2, wherein when the moving speed of the camera increases, the camera control unit reduces the exposure time and controls the blur of the captured image to be within the allowable pixel number.

4. The control system according to claim 2, wherein the camera control unit instructs the robot control unit to update a speed limit value of the robot in a case where the camera control unit cannot set the exposure time for suppressing the blur within the allowable pixel number for the moving speed of the camera.

5. The control system according to claim 4, wherein the camera control unit instructs the robot control unit to decrease the speed limit value in a case where the moving speed of the camera cannot suppress the blur within the allowable pixel number in the exposure time to be set as a shortest possible exposure time.

6. The control system according to claim 2, further comprising a position estimation unit that performs position estimation on a basis of the captured image of the camera, wherein
   the camera control unit changes the allowable pixel number on a basis of a deviation between a target position input to the robot control unit and an estimated position estimated by the position estimation unit.

7.  The control system according to claim 6, wherein the camera control unit changes the allowable pixel number to a larger value as the deviation increases, and changes the allowable pixel number to a smaller value as the deviation decreases.

8.  The control system according to claim 6, wherein the camera control unit controls a frame rate of the camera on a basis of at least one of the deviation or the moving speed of the camera.

9.  The control system according to claim 8, wherein the camera control unit reduces a frame rate of the camera when the deviation is small or the moving speed of the camera is not fast.

10. The control system according to claim 1, wherein the camera control unit determines the imaging condition of the camera every time a zoom operation of the camera is performed.

11. The control system according to claim 1, wherein the moving speed of the camera includes a relative speed between a target object of the robot and the camera.

12. A control method for controlling a robot and a camera equipped on the robot, the control method comprising steps of:

    acquiring a moving speed of the camera by a motion of the robot;
    setting an imaging condition of the camera on a basis of the moving speed of the camera; and
    controlling the imaging operation of the camera on a basis of the imaging condition having been set.

13. A camera control device comprising:

    an acquirer that acquires a moving speed of a camera by a motion of a robot equipped with the camera;
    a setting unit that sets an imaging condition of the camera on a basis of the moving speed of the camera; and
    an execution unit that executes an imaging operation of the camera on a basis of the imaging condition having been set.

FIG. 1

CONTROL SYSTEM 100

ROBOT CONTROL UNIT 110

ROBOT 101

CAMERA 102

$T_{exp}$

CAMERA CONTROL UNIT 120

$\dot{x}$

SPEED LIMITER 112

$x_{cmd}$

DEVIATION

+

−

COMMAND PROCESSING UNIT 111

$\dot{x}$

$\dot{x}'$

IK CALCULATOR 113

$\dot{\theta}$

TARGET OBJECT 103

$x_e$

POSITION ESTIMATION UNIT 130

EP 4 333 421 A1

## FIG. 2

START

HAS INSTRUCTION COMMAND BEEN GIVEN? — S201
No

Yes

CONVERT VALUE INTO SPEED COMMAND VALUE — S202

IS SPEED COMMAND VALUE EQUAL TO OR LESS THAN SPEED LIMIT VALUE? — S203
No

Yes

REPLACE SPEED COMMAND VALUE WITH SPEED LIMIT VALUE — S204

CONVERT SPEED COMMAND VALUE TO ANGULAR SPEED OF JOINT — S205

EXECUTE ROBOT MOTION — S206

PROCESSING BY ROBOT CONTROL UNIT 110

ACQUIRE SPEED INFORMATION — S207

CALCULATE OPTIMUM EXPOSURE TIME — S208

IMAGE TARGET OBJECT — S209

PROCESSING BY CAMERA CONTROL UNIT 120

PERFORM POSITION ESTIMATION OF TARGET OBJECT — S210

CALCULATE DEVIATION — S211

PROCESSING BY POSITION ESTIMATION UNIT 130

PERFORM FEEDBACK CONTROL — S212

PROCESSING BY ROBOT CONTROL UNIT 110

COMPLETED?
No          Yes

END

# FIG. 3

ROBOT 101

301

$\dot{x}$

CAMERA 102

TARGET OBJECT 103

FOV 302

# FIG. 4

## FIG. 5

CONTROL SYSTEM $\underline{500}$

ROBOT CONTROL UNIT 110

$x_{cmd}$ → DEVIATION (+ / −) → COMMAND PROCESSING UNIT 111 → $\dot{x}$ → SPEED LIMITER 112 → $\dot{x}'$ → IK CALCULATOR 113 → $\dot{\theta}$ → ROBOT 101

CAMERA 102 — $T_{exp}$ → CAMERA CONTROL UNIT 120 → $\dot{x}$

TARGET OBJECT 103

SPEED LIMITER VALUE UPDATE INSTRUCTION

$x_e$ ← POSITION ESTIMATION UNIT 130

EP 4 333 421 A1

# FIG. 6

START

PERFORM INITIAL SETTING — S601

HAS INTERRUPT EVENT OCCURRED? — S602
No

Yes

ACQUIRE SPEED INFORMATION — S603

CALCULATE OPTIMUM EXPOSURE TIME $T_{exp}$ — S604

S605

CAN $T_{exp}$ BE SET? Yes

No

CALCULATE SPEED LIMIT VALUE BY USING LIMIT VALUE OF $T_{exp}$ — S606

UPDATE SPEED LIMIT VALUE — S607

UPDATE EXPOSURE TIME $T_{exp}$ OF CAMERA — S608

20

# FIG. 7

CONTROL SYSTEM $\underline{700}$

## FIG. 8

START

PERFORM INITIAL SETTING — S801

HAS INTERRUPT EVENT OCCURRED? — S802  No

Yes

ACQUIRE DEVIATION Δx — S803

UPDATE ALLOWABLE PIXEL NUMBER N OF BLUR — S804

ACQUIRE SPEED INFORMATION — S805

CALCULATE OPTIMUM EXPOSURE TIME $T_{exp}$ — S806

S807

CAN $T_{exp}$ BE SET?  Yes

No

CALCULATE SPEED LIMIT VALUE BY USING LIMIT VALUE OF $T_{exp}$ — S808

UPDATE SPEED LIMIT VALUE — S809

UPDATE EXPOSURE TIME $T_{exp}$ OF CAMERA — S810

# FIG. 9

ZOOM LENS
902

FOCAL LENGTH
FOV

IMAGE
STABILIZER
901

$T_{exp}$

TIMING
GENERATOR
905

$\dot{x}_{robot}$
$\dot{x}_{target}$

RELATIVE
SPEED
CONVERTER
903

$\dot{x}$

$\dot{x}_{limit}$

SPEED
LIMITER
112

$N, NP, T_{exp\_int}$

PROCESSING
UNIT
904

EP 4 333 421 A1

## INTERNATIONAL SEARCH REPORT

| | International application No. |
|---|---|
| | **PCT/JP2021/048789** |

**A.    CLASSIFICATION OF SUBJECT MATTER**

*H04N 5/235*(2006.01)i; *B25J 13/08*(2006.01)i; *G03B 7/093*(2021.01)i
FI:    H04N5/235 300; B25J13/08 A; G03B7/093; H04N5/235 200

According to International Patent Classification (IPC) or to both national classification and IPC

**B.    FIELDS SEARCHED**

Minimum documentation searched (classification system followed by classification symbols)

H04N5/235; B25J13/08; G03B7/093

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | US 2021/0026366 A1 (R-GO ROBOTICS LTD.) 28 January 2021 (2021-01-28) paragraphs [0028]-[0059], fig. 2-3 | 1-5, 10-13 |
| Y | | 6-9 |
| Y | WO 2017/179378 A1 (NATIONAL UNIVERSITY CORP. HOKKAIDO UNIVERSITY) 19 October 2017 (2017-10-19) paragraphs [0050], [0062], [0078]-[0079], [0083], [0093] | 6-9 |
| Y | JP 2019-168270 A (OMRON CORP.) 03 October 2019 (2019-10-03) paragraph [0135] | 6-9 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **03 February 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/048789** |

| Patent document cited in search report | | | Publication date (day/month/year) | Patent family member(s) | Publication date (day/month/year) |
| --- | --- | --- | --- | --- | --- |
| US | 2021/0026366 | A1 | 28 January 2021 | (Family: none) | |
| WO | 2017/179378 | A1 | 19 October 2017 | US 2019/0118970 A1 paragraphs [0073], [0086], [0111]-[0112], [0116], [0126] EP 3444579 A1 KR 10-2018-0126570 A CN 109073467 A | |
| JP | 2019-168270 | A | 03 October 2019 | US 2019/0297266 A1 paragraph [0167] EP 3542972 A1 CN 110296940 A | |

Form PCT/ISA/210 (patent family annex) (January 2015)

**EP 4 333 421 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020162916 A